# EUROPEAN PATENT APPLICATION

(11) **EP 4 467 767 A1**
(43) Date of publication of application: **27.11.2024**
(21) Application number: 23175306.2
(22) Date of filing: 25.05.2023
(51) Int. Cl.: E21B 41/00, G01N 17/00

(54) **A TEST SYSTEM FOR DOWNHOLE EQUIPMENT**

(71) Applicant: Welltec Manufacturing Center Completions ApS, 6715 Esbjerg N (DK)
(72) Inventor: Fornitz, Kasper Holst, 6715 Esbjerg N (DK)
(74) Representative: Dragsted Partners A/S

(57) **Abstract**

A test system comprising a first CO2 vessel having a first predefined volume configured to hold and/or receive a first predefined amount of CO2, having a first CO2 output, a second CO2 vessel having a second predefined holding volume configured to hold and/or receive a second predefined amount of CO2 having a second CO2 input, a test section having a third CO2 input in fluid communication with the first CO2 output and a third CO2 output in fluid communication with the second CO2 input, where the test section is configured to hold a first sample, a first valve arranged between the first CO2 output and the third CO2 input, and a second valve arranged between the third output and the second CO2 input.

## Description

The present invention relates to a test system comprising a first CO2 vessel having a first predefined volume configured to hold and/or receive a first predefined amount of CO2, having a first CO2 output, where the test section is configured to hold a first sample, a first valve is arranged between the first CO2 output and the third CO2 input, and a second valve is arranged between the third output and the second CO2 input.

There are a number of different ways of attempting to find ways of providing storage for CO2 that has been captured from the atmosphere or from carbon emissions in order to reduce the content of CO2 in the atmosphere.

A number of ways have been developed where CO2 may be captured from the atmosphere or from emissions having a CO2 content, where the CO2 has been captured in its gaseous phase and has been collected in tanks or other types of storage vessels. However, methods are continuously being developed attempting to store the captured CO2 responsibly, and thereby reducing the possibility of the CO2 being re-released into the atmosphere.

One way of doing so is to pump the CO2 into oil wells, or into boreholes of wellsites, after the wells have been depleted, and the boreholes are intended to be abandoned. A number of studies have been performed where the corrosion effect of CO2 has been tested on the structures of boreholes, such as the metal casings, etc., in order to ensure that the CO2 does not cause excessive corrosion on the structure of the borehole and to ensure that the CO2 does not reduce the lifespan of the abandoned borehole.

However, as the CO2 is to be pumped into existing structures that have been utilized for different purposes in the past, the existing structures often have numerous parts of equipment that have been relevant for e.g. the production of oil in the borehole. Such parts may be valves or other parts arranged inside the inner diameter of a borehole casing.

Alternatively, existing wells that may be utilized for CO2 storage may be retrofitted to serve the purpose of CO2 storage for Carbon Capture. This means that new completion equipment and downhole parts/equipment may be installed in the well, where the new equipment may have different or smaller inner diameters, which can cause pressure losses across the newly installed completion equipment and/or downhole parts or downhole equipment.

The behaviour of valves and downhole equipment is known in the oil production industry, but as CO2 has a completely different behaviour than oil, there is a need to understand how the downhole equipment will affect a stream of CO2 being pumped into the borehole.

In accordance with the invention, there is provided a test system comprising: a first CO2 vessel having a first predefined volume configured to hold and/or receive a first predefined amount of CO2, having a first CO2 output, a second CO2 vessel having a second predefined holding volume configured to hold and/or receive a second predefined amount of CO2 having a second CO2 input, a test section having a third CO2 input in fluid communication with the first CO2 output and a third CO2 output in fluid communication with the second CO2 input, where the test section is configured to hold a first sample, a first valve is arranged between the first CO2 output and the third CO2 input, and a second valve is arranged between the third output and the second CO2 input.

The test system may be configured for testing at least a first effect of a CO2 stream passing a downhole part.

The test system is configured to provide a flow of CO2 past a test section, where the test section may be configured to hold a downhole part or downhole equipment, and where the flow of CO2 may be provided in a controlled manner past the test section at a predefined flowrate or at a predefined pressure. The test system has a first CO2 vessel that may be configured to hold a predefined amount of CO2 inside the first CO2 vessel, and where the first CO2 vessel may be filled with CO2 prior to an execution of a test. The first valve may be configured to selectively prevent the CO2 from being released from the first CO2 vessel prior to testing, and during testing the first valve may be opened in order to allow a stream of CO2 to exit the first output of the first CO2 vessel.

The test section may be in fluid communication with the first CO2 vessel, where the first valve may open and close the fluid communication between the first CO2 vessel and the test section. When the CO2 flow has been initiated in the test system, the CO2 will flow through the test section, and the CO2 will exit the third output of the test section, which is in fluid communication with the second CO2 vessel. The CO2 will flow from the test section and into the second input of the second CO2 vessel, where the spent CO2 that has passed through the test section will be collected by the second CO2 vessel, and where the spent CO2 will provide a second predefined amount of CO2 inside the second CO2 vessel.

The test system may be a closed system, so that the CO2 that exits the first CO2 vessel is passed through closed fluid communication channels that are eventually connected with the second CO2 vessel, so that the majority of the CO2 released by the first CO2 vessel is collected by the second CO2 vessel, and the second valve may be closed to ensure that the CO2 does not escape from the second CO2 vessel after the performance of the test.

The test system may thereby be utilized to provide a CO2 flow past a downhole part which is arranged inside the test section, where the effect of the CO2 flow past the downhole part may be monitored and observed in order to understand how CO2 flow inside a borehole will react when the CO2 comes into contact with a downhole part.

The test system may be configured to operate so that the pressure of the CO2 or the flowrate of the CO2 may be controlled through the test section, where the test system may be configured to perform tests at a specific flowrate of CO2 through the test section 7, and where the effect of the specific flowrate when passing specific downhole equipment may be observed, or where the tests are performed at a predefined pressure upstream of the test section 7 to observe the effect of the downhole equipment on the pressure of the CO2.

The fluid communication between parts of the test system may be provided via fluid conduits, pipes, fluid lines, pipelines, channels or other types of fluid communication means that ensure a fluid communication pathway from one part of the test system to another part of the test system.

Within the understanding of the present disclosure, the term "downhole part" or "downhole equipment" may mean any part of a cased borehole that may be present inside the inner diameter of a cased borehole, or inside the inner diameter of the casing. The downhole parts or the downhole equipment may be valves, packers, centralizers, subs, or other types of equipment or parts that are inside a casing.

In one exemplary embodiment, the test system comprises at least one first sensor chosen from a list of a first pressure sensor, a first temperature sensor and a first flow sensor, where the sensor is positioned in fluid communication with the first CO2 output, and optionally with the third CO2 input. The sensor may be utilized to provide a first sensor output relating to the condition of the CO2 in a particular position after the CO2 has left the first CO2 output. The first sensor output may be utilized to observe a certain property or condition of the CO2 before it enters the test section in order to establish a baseline of the CO2 prior to the CO2 coming into contact with the downhole equipment that is arranged in the test section.

In one exemplary embodiment, the test system comprises at least one second sensor chosen from a list of a second pressure sensor, a second temperature sensor or a second flow sensor, where the sensor is positioned in fluid communication with the second CO2 input, and optionally with the third CO2 output. The second sensor may be utilized to provide a second sensor output relating to the condition of the CO2 in a particular position after the CO2 has come into contact with the downhole equipment, i.e. after the CO2 has left the third CO2 output. Thus, the second sensor output may be utilized to observe a certain property or condition of the CO2 after it has flowed through the test section.

Thus, when a first and a second sensor are used, the first sensor output and the second sensor output may be compared to each other to ascertain whether there is any difference between the first sensor output and the second sensor output. As an example, should the first sensor and the second sensor be in the form of pressure sensors, it may be possible to see whether there is a pressure difference in the CO2 prior to the test section and after the test section, where any pressure difference may indicate the effect of the downhole equipment on the CO2 flow. Similarly, if the first sensor and the second sensor are flow sensors, the first sensor output and the second sensor output may be compared to each other, and where any difference in flow may be caused by the downhole equipment. Similarly, if the first sensor and the second sensor are temperature sensors, the first sensor output and the second sensor output may be compared to each other, and where any difference in temperature may be caused by the downhole equipment.

Alternatively, other types of sensors may be utilized, such as optical sensors, image sensors or any other sensor that the person skilled in the art would recognize to be useful to obtain a property of the flow of CO2.

In one exemplary embodiment, the test system comprises a third valve arranged between the second CO2 input and the third CO2 output and controlled by a second pressure sensor. The second pressure sensor may be in fluid communication with the second fluid output. Thus, the pressure sensor and the valve may be utilized for a feedback loop, where the second pressure sensor output may be utilized to control the third valve. The third valve may be utilized to regulate the flow of CO2 after the test section, e.g. where there is a need for backpressure downstream of the test section if such a test is required as part of a testing scope.

In one exemplary embodiment, the test system comprises a recirculation loop providing fluid communication between a first CO2 input of the first CO2 vessel and a second CO2 output of the second CO2 vessel. The provision of a recirculation loop allows the transfer of CO2 from the second CO2 vessel to the first CO2 vessel or vice versa, should it be required to run the test procedure with the CO2 in the first CO2 vessel. Thus, when the CO2 has been captured in the second vessel after testing has been performed, the CO2 may be recirculated back into the first CO2 vessel in order to prepare the first CO2 vessel for a subsequent testing procedure. Thus, the recirculation loop allows the CO2 to flow in one direction in the test system, where the CO2 is recirculated towards first CO2 vessel and is prepared for a subsequent testing.

Alternatively, after testing has been performed, and the CO2 is present in the second CO2 vessel, the CO2 may be transferred using fluid communication in the opposite direction of the testing, i.e. where the CO2 flows from the second CO2 input to the third CO2 output into the testing section, out of the testing section via the third CO2 input and into the first CO2 output of the first CO2 vessel.

Yet further, when the CO2 is held in the second CO2 vessel after a testing procedure, the system may be inverted, so that the second CO2 vessel becomes the first CO2 vessel, and testing may be performed in an inverse direction to the first testing procedure, where the CO2 flows from the second CO2 vessel to the first CO2 vessel, and where the second CO2 vessel is thereby seen as the first CO2 vessel, and the first CO2 vessel is seen as the second CO2 vessel.

In one exemplary embodiment, the third output of the test section is in selective fluid communication with the first CO2 input of the first CO2 vessel and/or the second CO2 input of the second CO2 vessel. This means that the first CO2 vessel and the second CO2 vessel may be connected in parallel with the test section, and the third input of the test section may be in selective fluid communication with the first CO2 output and the second CO2 output. The test system may be a recirculation loop, where the first CO2 output of the first CO2 vessel may be in fluid communication with the third CO2 input of the test section, and the third CO2 output of the test section is in fluid communication with the second CO2 input of the second CO2 vessel. In this situation, the fluid communication between the first CO2 input of the first CO2 vessel and the third CO2 output of the test section may be closed, and the fluid communication between the second CO2 output of the second CO2 vessel and the third CO2 input of the test section may be closed. Thus, the recirculation process introduces the CO2 into the second CO2 vessel to hold it there. When the next testing is to occur, the fluid communication between the first CO2 input of the first CO2 vessel and the third CO2 output of the test section may be open, and the fluid communication between the second CO2 output of the second CO2 vessel and the third CO2 input of the test section may be open, while the fluid communication between first CO2 output of the first CO2 vessel and the third CO2 input of the test section may be closed, and the fluid communication between the third CO2 output of the test section with the second CO2 input of the second CO2 vessel is closed, allowing the second CO2 vessel to release CO2 and the first CO2 vessel to receive the CO2 after it has passed through the test section.

In one exemplary embodiment, the test system comprises a heat exchanger arranged between the first CO2 output and the third CO2 input. The heat exchanger may be used to change the heat of the CO2 in order to alter the pressure inside the test system, or in order to change the state of the CO2 inside the test system. The CO2 may be in liquid form, gas form, supercritical form or solid form during the performance of the testing, and the heat exchanger may be utilized to phase change the CO2 prior to it entering the test section. The operation of the heat exchanger may be controlled via a feedback loop that may be connected to a first temperature sensor arranged between the first CO2 output and the third CO2 input. The heat exchanger may be configured to increase or decrease the temperature of the CO2 that exits the first CO2 vessel via the first CO2 output.

In one exemplary embodiment, the test system comprises a regulator valve positioned between the first CO2 output and the third CO2 input. The regulator valve may be configured to control the flowrate and/or pressure through the test block by being arranged downstream of the first CO2 vessel, and the regulator valve may be adapted to control the flow of CO2 out of the first CO2 vessel. Thus, when the first CO2 vessel holds a predefined amount of CO2, it may be assumed that the CO2 is held in the vessel at a first pressure. The regulator valve may open up for fluid communication between the first CO2 vessel and the test section, and the regulator valve can/may control how much CO2 is let out of the CO2 tank, and at what pressure and/or at what flowrate. The pressure may be defined as the effective pressure inside the test section, and the flowrate may be the flowrate of CO2 that enters the test section.

In one exemplary embodiment, the first CO2 vessel is configured to have a first pressure, and the second CO2 vessel is configured to have a second pressure, where the first pressure is greater than the second pressure, or the second pressure is greater than the first pressure. Thus, the pressure difference may be capable of moving the CO2 from one CO2 vessel to another CO2 vessel, as the CO2 flows from a high-pressure part of the test system to a low-pressure part of the test system.

In one exemplary embodiment, the first CO2 vessel and/or the second CO2 vessel comprise(s) a plurality of vessel sections, each having a first predefined volume, where the plurality of vessel sections define the first predefined CO2 amount and/or the second predefined CO2 amount. Thus, the first CO2 vessel and/or the second CO2 vessel may comprise a plurality of vessel sections, where the predefined number of vessel sections are capable of holding the predefined amount of CO2 that is intended to be held in the vessel sections. The vessel section may be in the form of e.g. a closed cylinder, where the cylinder has a vessel input and a vessel output.

In one exemplary embodiment, each vessel section comprises a vessel section input and a vessel section output, where the vessel section inputs are in fluid communication with the first CO2 input and/or the second CO2 input, and where the vessel section outputs are in fluid communication with the first CO2 output and/or the second CO2 output. Thus, each vessel section can operate as an isolated part of the CO2 vessel. The vessel inputs and vessel outputs may be collected to the first CO2 input or the second CO2 input and to the first CO2 output or the second CO2 output. Consequently, each vessel section in the first CO2 vessel or the second CO2 vessel may be in parallel connection with the vessel CO2 input and/or the vessel CO2 output.

In one exemplary embodiment, each vessel section comprises a piston, where one side of the piston is configured to hold an incompressible fluid, and the opposing side of the piston is configured to hold CO2. The incompressible fluid may be pumped into one side of the piston, thereby causing the piston to move in a direction away from the incompressible fluid, and the piston may therefore be configured to push the CO2 out of the vessel section. Thus, the movement of the piston reduces the volume of the vessel section on one side of the piston, while it increases the volume of the vessel section on the opposite side of the piston.

In one exemplary embodiment, the first output has a first internal diameter, and the test section has a third internal diameter, where the first internal diameter is larger than or equal to the third internal diameter. The internal diameter of the first output may affect the magnitude and flow of the CO2 from the first CO2 vessel and towards the test section. By making sure that the third internal diameter of the test section is at least equal to the internal diameter of the test section, it is ensured that there be no flow rate decrease from the first CO2 vessel and towards the test section. By having a smaller diameter in the test section, the flow rate of the CO2 may be manipulated to increase in the test section, if this is desired. The first sensor may be arranged on a part of the fluid communication channel which has a decrease in diameter in order to establish the effect of the reduction of diameter on the flow of the CO2.

The present disclosure also relates to a method of testing the effect of a CO2 stream on downhole equipment, the method comprising the steps of: providing a first predefined amount of CO2 in a first CO2 vessel, releasing the first predefined amount of CO2 from the first CO2 vessel, creating a CO2 stream into a test section holding downhole equipment, the CO2 stream passing the downhole equipment, providing a first sensor output at an upstream position of the downhole equipment, providing a second sensor output at a downstream position of the downhole equipment, and collecting the first predefined amount of CO2 in a second CO2 vessel.

The following is an explanation of exemplary embodiments with reference to the drawings in which:
Fig. 1 is a schematic drawing of an embodiment test system in accordance with the present disclosure,
Fig. 2 is a schematic drawing of an embodiment of a test system in accordance with the present disclosure,
Fig. 3 is a schematic drawing of an embodiment of a test system in accordance with the present disclosure, and
Fig. 4 is a schematic drawing of a first CO2 vessel and a second CO2 vessel in fluid communication with a test section.

Various exemplary embodiments and details are described below, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practised in any other embodiments even if not so illustrated, or if not so explicitly described.

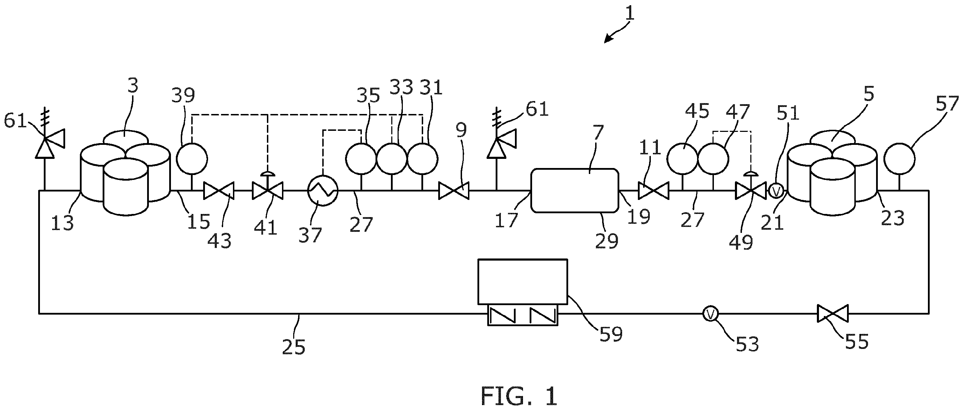

Fig. 1 shows a schematic view of a test system 1 in accordance with the present disclosure, where the test system 1 comprises a first CO2 vessel 3, a second CO2 vessel 5, a test section 7 as well as a first valve 9 and a second valve 11. The system shown in Fig. 1 also has a recirculation loop 25 which allows the CO2 to be recirculated in a circular flow along the test system 1. The first CO2 vessel 3 comprises a first CO2 input 13 and a first CO2 output 15, and the second CO2 vessel 5 comprises a second CO2 input 21 and a second CO2 output 23. The first CO2 input 13 and the second CO2 output 23 may be seen as optional, as the test system shown in Fig. 1 may be provided without a recirculation loop 25, where the direction of flow of CO2 may be reversed, or the CO2 collected in the second CO2 vessel may be pumped back towards the first tank through the test section 7 in order to recharge the first CO2 vessel with the CO2 to perform a test.

The test system 1 may be operated by providing a first amount of CO2 inside the first CO2 vessel 3, where the first valve 9 prevents the CO2 from travelling downstream towards the test section 7. The first valve 9 may be in fluid communication with the first CO2 output 15, and when the first valve 9 is opened, the CO2 flows along a fluid communication conduit 27 from the first CO2 output 15 and past the open first valve 9 and into a third CO2 input 17 of the test section 7. The test section 7 may be a chamber291 holding downhole equipment inside a chamber 29, where the chamber is in fluid communication with the third CO2 input 17 and with a third CO2 output 19. When the CO2 flows into the third CO2 input 17, it enters the chamber 29 and passes the downhole equipment, such as a downhole valve or similar downhole equipment, and flows towards the third CO2 output 19, where the CO2 passes the second valve 11, which is in an open state, and through a fluid communication conduit 27 into the second CO2 input 21 of the second CO2 vessel. The second CO2 vessel 5 may be configured to collect all the CO2 that is sent through the test section 7 from the first CO2 vessel 3 in order to collect and hold the used CO2 and to ensure that the CO2 does not escape the test system 1 after testing has been performed. Thus, the test system 1 may be a closed test system where the CO2 may be reused for subsequent testing, and the valves may be utilized to ensure that the CO2 present in the CO2 vessels does not escape when the chamber 29 of the test section 7 is opened to replace the downhole equipment to be tested.

The test system 1 also comprises the recirculation loop 25, where the recirculation loop provides fluid communication between the second CO2 output 23 of the second CO2 vessel 5 and the first CO2 input 13 of the first CO2 vessel 3. This means that when the CO2 has been collected in the second CO2 vessel 5 after a test has been performed, the CO2 may be transferred via the recirculation loop 25 back to the first CO2 vessel 3 in order to recharge the first CO2 vessel 3 for a subsequent test.

The test system 1 may further comprise a first pressure sensor 31, a first temperature sensor 33, a first flow sensor 35 which are arranged on the flow conduit 27 between the first CO2 output 15 and the third CO2 input 17 of the test section 7. The first sensors 31, 33, 35 may be utilized to measure a characteristic of the CO2 flowing out of the first CO2 vessel 3 prior to it entering the test section 7.

The first temperature sensor 33 may be connected to a heat exchanger 37 in a feedback loop where the measured temperature of the CO2 may be utilized to adjust the temperature using the heat exchanger 37. The heat exchanger 37 may also be utilized together with the pressure sensor 31 (not shown) where the pressure and temperature of the CO2 may be used to adjust the temperature of the CO2 in the heat exchanger for a phase change of the CO2 travelling through the heat exchanger. Thus, as an example, a liquid CO2 may be heated up in order to phase change the CO2 to solid or supercritical C02 if the test specification requires the CO2 to be in that form. Thus, the heat exchanger 37 may be adjusted on feedback from the first temperature sensor 33 and/or the pressure sensor 31 to adjust the temperature of the CO2 to a suitable temperature for the desired phase of the CO2.

The test system 1 may further comprise a third pressure sensor 39, where the third pressure sensor 39 may be arranged upstream from the heat exchanger 37 and or a regulator valve 41. The output of the third pressure sensor 39, the first temperature sensor 33 and the flow sensor 35 may be utilized to operate the regulator valve 41, so that the pressure before the regulator valve and the pressure after the regulator valve may e.g. be used as feed-forward or feed-back on how open the regulator valve 41 has to be in order to get the desired pressure into the test section 7, or where the flow sensor 35 is used to obtain the desired flow into the test section 7. Thus, the first sensors 31,33,35 and the third sensor 39 may be utilized to adjust the characteristics of the CO2 flow from the first CO2 vessel 3 and into the test section 7 by operating the regulator valve 41 and/or the heat exchanger 37 to have the CO2 obtain its required or desired flow characteristics in the test section 7 in order to test the downhole equipment in accordance with the test specifications.

The test system 1 may comprise a third valve 43 arranged prior to the regulator valve 41 which can open and close fluid communication between the regulator valve 41 and the first CO2 output 15.

The test system may further comprise a second temperature sensor 45, a second pressure sensor 47 and a second flow sensor (not shown) which are positioned downstream of the test section 7 and upstream of the second CO2 vessel 5. The test system 1 may further comprise a second regulator valve 49 which is downstream of the test section 7, where the measurements of the second pressure sensor 47 may be utilized to control the second regulator valve 49. Thus, the pressure measured downstream of the test section 7 may have to be adjusted in order to ensure that the CO2 flows effectively and as desired through the test section 7, e.g. in order to ensure that the pressure upstream of the test section 7 is higher than the pressure downstream of the test section 7 to make sure that the CO2 flows in the correct direction.

The test system 1 may further comprise a compression pump 51 in order to create a low-pressure zone upstream of the pump 51 and a high-pressure zone downstream of the pump in order to compress the CO2 or to pump the CO2 into the second CO2 vessel 5.

The test system 1 may further comprise a recirculation pump 53 arranged in the recirculation loop 25 in order to ensure that the CO2 may be pumped back to the first CO2 vessel 3 from the second CO2 vessel 5. The test system 1 may also comprise a fourth valve 55 which is arranged on the recirculation loop 25 in order to close the fluid communication between the second CO2 vessel 5 and the first CO2 vessel 3 when recirculation is not needed, e.g. when a test is being run.

The test system 1 may further comprise a fourth pressure sensor 57 which is arranged downstream of the second CO2 output 23 of the second CO2 vessel 5 to measure the pressure of the CO2 in the recirculation loop 25.

The test system 1 may further comprise a gas booster 59 which is arranged downstream of the second CO2 output 23 of the second CO2 vessel 5 and which may be utilized to increase the pressure inside the recirculation loop 25.

The first CO2 vessel 3 and the second CO2 vessel 5 may be utilized as CO2 buffers in order to ensure that the system has sufficient amounts of CO2 to perform a test of downhole equipment.

The test system 1 shown in Figs. 1, 2 and 3 may be provided with one or more safety valves 61 placed in different positions. The safety valves allow pressure to be released from the system in a region of the system 1 having a safety valve 61 if the pressure of the system exceeds a predefined safety limit.

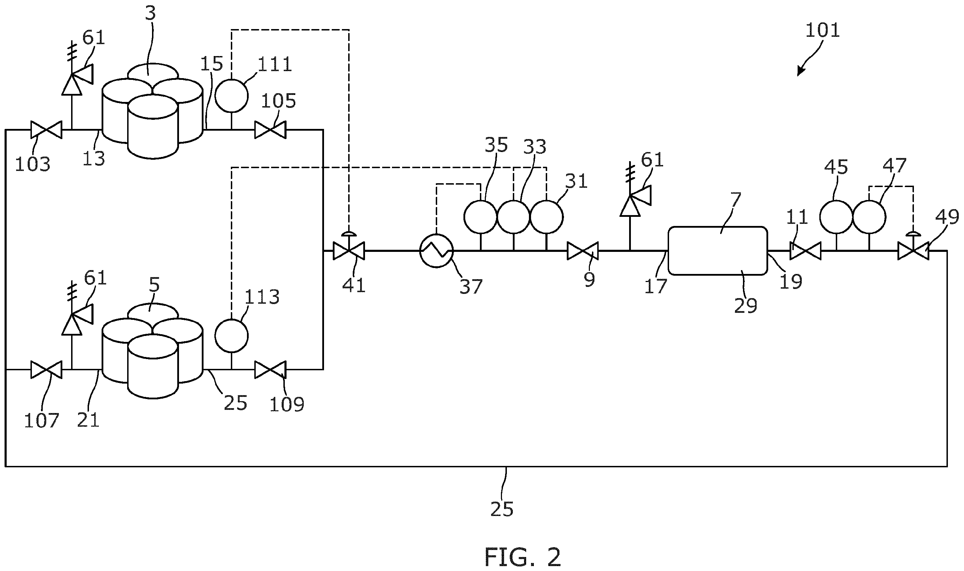

Fig. 2 shows a test system 101 which has a similar function as the test system 1 shown in Fig. 1, where the reference numbers in Fig. 1 are also applicable to the reference numbers in Fig. 2, and the same elements shown in Fig. 1 may be present in the test system 101 of Fig. 2. The difference in the test system 1 may be seen where the system 1 has been rearranged by providing the first CO2 vessel 3 and the second CO2 vessel 5 in parallel fluid communication with the third CO2 input and the third CO2 output of the test section 7. The first CO2 vessel 3 has been provided with a fifth valve 103 in fluid communication with the first CO2 output 15 and a sixth valve 105 in fluid communication with the first CO2 input 13, and the second CO2 vessel 5 has been provided with a seventh valve 107 in fluid communication with the second CO2 output 23 and an eighth valve 109 in fluid communication with the second CO2 input 21. This parallel arrangement of the first CO2 vessel 3 and the second CO2 vessel 5 means that in a first test when CO2 is arranged to flow into the test section 7, the CO2 may flow from the first CO2 vessel 3 via the first CO2 output 15 and may be collected via the recirculation loop 25 by the second CO2 vessel 5. Thus, in order to do this, the sixth valve 105 is open, while the fifth valve 103 is closed, and the seventh valve 107 is open, and the eighth valve 109 is closed. When a subsequent test is to be performed, the second CO2 vessel 5 may be utilized to deliver the CO2 towards the test section 7, while the first CO2 vessel 3 may be utilized to collect the CO2 downstream of the test section 7. Thus, for this to work, the eighth valve 109 is open, while the seventh valve 107 is closed, while the fifth valve 103 is open, and while the sixth valve 105 is closed. Thereby, the functioning of the CO2 vessels may be inversed as necessary, and there is no need to recirculate CO2 from one vessel to another vessel in between tests in order to recharge the test system 101.

The test system 101 may further comprise a fifth pressure sensor 111 that is arranged between the sixth valve 105 and the first CO2 output 15, and a sixth pressure sensor 113 that is arranged between the eighth valve 109 and the second CO2 output 23, where the output of the pressure sensors 111, 113 may be utilized to control the regulator valve 41, similarly to what is shown in Fig. 1.

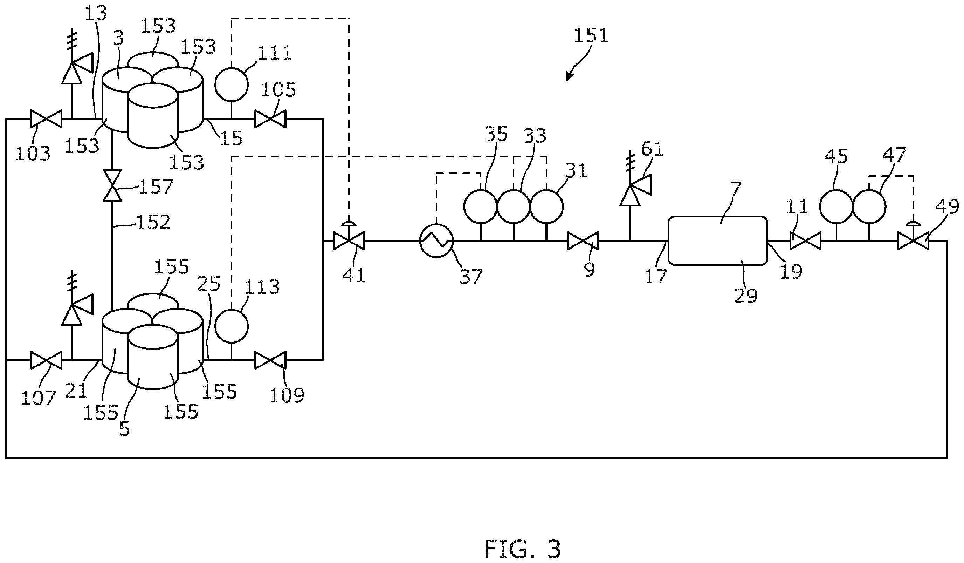

Fig. 3 shows a test system 151 having a different arrangement than the test system 101 shown in Fig. 2, where a fluid communication channel 152 is provided between the first CO2 vessel 3 and the second CO2 vessel 5. In this instance, the first CO2 vessel 3 and the second CO2 vessel 5 comprise a plurality of first vessel sections 153 and second vessel sections 155. Thus, the fluid communication channel 152 may be connected between one first vessel section 153 and one second vessel section 155, allowing collected CO2 in one of the vessel sections 153, 155 to be transferred to the opposite of the vessel sections 153, 155 during the performance of a test. Thus, if more CO2 is needed for a test, the fluid communication channel 152 may transfer CO2 during a test between the first CO2 vessel 3 and the second CO2 vessel 5. The fluid communication channel 152 may be provided with a ninth valve 157 which may be used to selectively open and close the fluid communication channel 152.

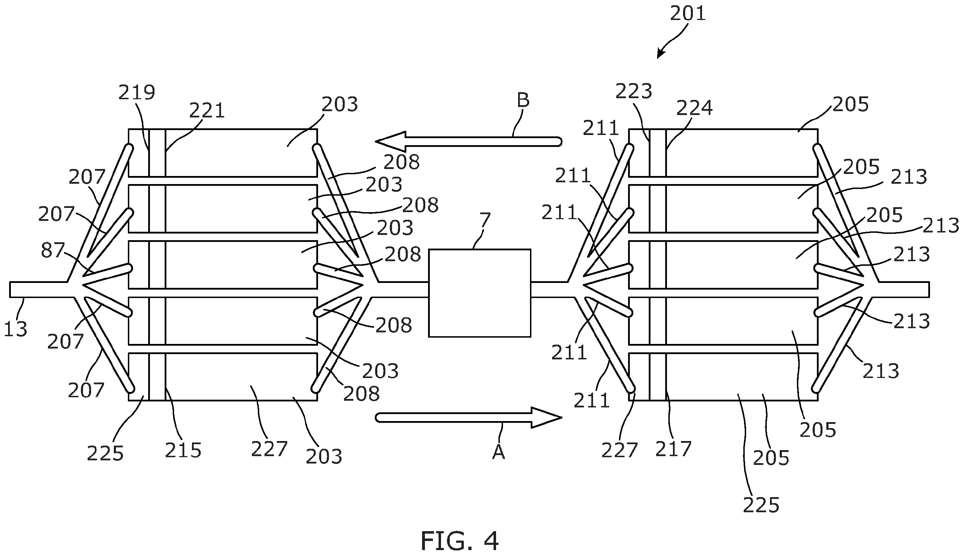

Fig. 4 shows a schematic diagram of a test system 201, where the test system 201 may be similar to and have the same components as shown in the embodiments in Fig. 1, Fig. 2 and Fig. 3. This figure 4 intends to show the first CO2 vessel 3 and the second CO2 vessel 5 where the first CO2 vessel 3 has separate first vessel sections 203, and the second CO2 vessel has separate second vessel sections 205. Each vessel section 203 of the first CO2 vessel 3 has a first vessel section input 208 and a first vessel section output 213, and each vessel section 205 of the second CO2 vessel 5 has a second vessel section input 211 and a second vessel section output 213. The first vessel section inputs 207 may be connected with the first CO2 input 13, and the second vessel section outputs 213 may be connected with the first CO2 output 15. The second vessel section inputs 211 may be connected with the second CO2 input 21, and the second vessel section outputs 213 may be connected with the second CO2 output 23.

Each first vessel section 203 of the first CO2 vessel 3 may be provided with a first piston 215, and each second vessel section 205 of the second CO2 vessel 5 may be provided with a second piston 217. The first piston 215 may have a primary side 219 and a secondary side 221, and the second piston 217 may have a primary side 223 and a secondary side 224. The part of the vessel section 203 facing the primary side 219 of the first piston 215 may hold an incompressible fluid 225 and on the opposite secondary side may hold CO2 227. The part of the vessel section 205 facing the primary side 223 of the first piston 215 may hold CO2 and on the opposite secondary side may hold an incompressible fluid 225.

When a test is to be performed in a direction A, the incompressible fluid 225 may be pumped into the first CO2 vessel 3 using the first input 13, which means that the first piston 215 moves in a direction towards the test section 7 and forces the CO2 into the test section 7. In the second CO2 vessel 5, the second piston 217 may move in a direction away from the test section 7 to increase the volume of the second vessel section 205 to receive the CO2 from the test section 7. This may cause the part of the second vessel 5 to reduce and the incompressible fluid 225 to be pushed out of the second output 23, or a pump may pump the incompressible fluid 225 from the secondary side to pull the fluid out of the second vessel section 205.

This allows the CO2 to be forced through the test section 7 at a high rate. When a subsequent test is to be performed, the process may be reversed, and the test may be performed in a direction B, where the incompressible fluid 225 is pumped into the second vessel section 205 and pushes the CO2 227 from the second vessel section 205 into the test section 7.

The use of the terms "first", "second", "third" and "fourth", "primary", "secondary", "tertiary", etc., does not imply any particular order, but the terms are included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is also to be noted that the words "a" or "an" preceding an element do not exclude the presence of a plurality of such elements.

It should further be noted that any reference signs do not limit the scope of the claims. Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A test system comprising:
- a first CO2 vessel having a first predefined volume configured to hold and/or receive a first predefined amount of CO2, having a first CO2 output
- a second CO2 vessel having a second predefined holding volume configured to hold and/or receive a second predefined amount of CO2 having a second CO2 input,
- a test section having a third CO2 input in fluid communication with the first CO2 output and a third CO2 output in fluid communication with the second CO2 input, where the test section is configured to hold a first sample,
- a first valve arranged between the first CO2 output and the third CO2 input, and
- a second valve arranged between the third output and the second CO2 input.

2. A test system in accordance with claim 1, wherein the test system comprises at least one first sensor chosen from a list of a first pressure sensor, a first temperature sensor and a first flow sensor, where the sensor is positioned in fluid communication with the first CO2 output, and optionally with the third CO2 input.

3. A test system in accordance with claim 1 or 2, wherein the test system comprises at least one second sensor chosen from a list of a second pressure sensor, a second temperature sensor and a second flow sensor, where the sensor is positioned in fluid communication with the second CO2 input, and optionally with the third CO2 output.

4. A test system in accordance with any of the preceding claims, wherein the test system comprises a third valve arranged between the second CO2 input and the third CO2 output and controlled by the second pressure sensor.

5. A test system in accordance with any of the preceding claims, wherein the test system comprises a recirculation loop providing fluid communication between a first CO2 input of the first CO2 vessel and a second CO2 output of the second CO2 vessel.

6. A test system in accordance with any of the preceding claims, wherein the third output of the test section is in selective fluid communication with the first CO2 input of the first CO2 vessel and/or the second CO2 input of the second CO2 vessel.

7. A test system in accordance with any of the preceding claims, wherein the test system comprises a heat exchanger arranged between the first CO2 output and the third CO2 input.

8. A test system in accordance with any of the preceding claims, wherein the test system comprises a regulator valve positioned between the first CO2 output and the third CO2 input.

9. A test system in accordance with any of the preceding claims, wherein the first CO2 vessel is configured to have a first pressure, and the second CO2 vessel is configured to have a second pressure, where the first pressure is greater than the second pressure, or the second pressure is greater than the first pressure.

10. A test system in accordance with any of the preceding claims, wherein the first CO2 vessel and/or the second CO2 vessel comprises a plurality of vessel sections, each having a first predefined volume, where a plurality of vessel sections define the first predefined CO2 amount and/or the second predefined CO2 amount.

11. A test system in accordance with any of the preceding claims, wherein each vessel section comprises a vessel section input and a vessel section output, where the vessel section inputs are in fluid communication with the first CO2 input and/or the second CO2 input, and where the vessel section outputs are in fluid communication with the first CO2 output and/or the second CO2 output.

12. A test system in accordance with any of the preceding claims, wherein each vessel section comprises a piston, where one side of the piston is configured to hold an incompressible fluid, and the opposing side of the piston is configured to hold CO2.

13. A test system in accordance with any of the preceding claims, wherein the first output has a first internal diameter, and the test section has a third internal diameter, where the first internal diameter is larger than or equal to the third internal diameter.

14. A method of testing the effect of a CO2 stream on downhole equipment, the method comprising the steps of:
- providing a first predefined amount of CO2 in a first CO2 vessel,
- releasing the first predefined amount of CO2 from the first CO2 vessel,
- creating a CO2 stream into a test section holding downhole equipment, the CO2 stream passing the downhole equipment,
- providing a first sensor output at an upstream position of the downhole equipment,
- providing a second sensor output at a downstream position of the downhole equipment, and
- collecting the first predefined amount of CO2 in a second CO2 vessel.
